# EUROPEAN PATENT APPLICATION

(11) **EP 1 274 161 A1**
(43) Date of publication of application: **08.01.2003**
(21) Application number: 01308766.3
(22) Date of filing: 15.10.2001
(51) Int. Cl.: H02K 7/116

(54) **Electric motor having a differential gear disposed within the rotor of the motor**

(30) Priority: 04.07.2001 GB 0116330
(71) Applicant: The Electric Motor Company Limited, Southampton, Hampshire SO40 9AH (GB)
(72) Inventor: Hanscombe, Peter, Sudbury, Suffolk CO10 0NE (GB)
(74) Representative: Lomas, Geoffrey Michael

(57) **Abstract**

A vehicle power generation means (1) comprises an electric machine (2) and a differential gear assembly (4) disposed within a housing structure (5).

The electric machine (2) comprises a stator portion (6), and a rotor portion (8) disposed radially inward of the stator portion (6) and spaced therefrom by an air gap (9). The electric machine (2) is preferably a brushless DC motor, as this will accommodate the differential gear assembly within the rotor portion (8). The electric machine (2) would be supplied with power from a suitable power source such as an electric battery.

## Description

The present invention relates to power generation means for a vehicle and a method for providing power for a vehicle and is concerned particularly with a combined electric machine and a differential gear assembly for a vehicle, said electric machine providing power to the drive means of the vehicle differential gear assembly and providing electric power generation means.

At present vehicles that are powered by an electric motor generally include an electric motor that drives a road wheel of the vehicle through a reduction gearbox. In one arrangement the power is transferred from the electric motor to the reduction gearbox comprising a worm and wheel gear. The electric power for the electric motor is normally stored in an electric battery.

According to a first aspect of the present invention there is provided power generation means for propelling a vehicle, the power generation means comprising a differential gear assembly comprising a rotatable housing containing an array of gears, and an electric machine comprising a stator and a rotor connected to the housing, the arrangement being such that in use the electromagnetic rotational force generated by the electric machine rotates the rotor and the housing of the differential gear assembly thus providing power output.

It will be appreciated that a suitable electric storage means will be provided for supplying the power generation means with an electric current.

Preferably, the rotor is directly attached to the housing, the arrangement being such that in use the rotational velocity of the rotor is the same as the rotational velocity of the housing.

Preferably, the rotatable housing of the differential gear assembly is disposed co-axially within the rotor of the electric machine.

In a preferred embodiment of the present invention the rotatable housing of the differential gear is integrally formed with part of the rotor of the electric machine.

The rotor is disposed co-axially within the stator and the rotor is preferably disposed co-axially around the rotatable housing of the differential gear; the arrangement being such that, in use, the electromagnetic rotational force rotates both the rotor and the housing about a common axis.

The electric machine is preferably a DC motor.

Preferably, the electric machine is a brushless DC motor.

The differential gear assembly preferably comprises two output gears each connected to an end of a respective axle, and a pair of idler gears each rotatably mounted on a respective shaft, each idler gear meshing with both output gears.

The two output gears and the two axles are preferably disposed co-axially with the rotational axis of the rotor.

The output gears are preferably bevel gears.

The idler gears are preferably bevel gears.

The power generation means preferably comprises a housing structure that supports the stator element of the electric machine.

The housing structure preferably contains the rotor and the differential gear assembly.

Preferably the housing structure is formed with two channels through which the axles extend in a direction along their rotational axis.

The housing structure preferably provides support for the rotor and the differential gear assembly.

The housing structure preferably provides support for the axles.

The housing structure preferably comprises bearing means through which the support is provided.

In an embodiment of the present invention the power generation means is preferably mounted between the rear wheels of a vehicle.

In a preferred embodiment of the present invention the power generation means is mounted between the wheels of a wheelchair vehicle.

In an embodiment of the present invention the electric machine preferably has a first operating condition as an electric motor and a second operating condition as an electric generator.

The term power generation means is used here within to describe both the means by which a vehicle is provided with a driving velocity and the means by which an electric current is generated by the velocity of a vehicle. It will be appreciated that in the first operating condition the power generation means drives the differential gear assembly and in the second operating condition the power generation means generates an electric current that is stored in the storage means.

According to a second aspect of the present invention there is provided a method of providing driving power generation means for a vehicle, the method comprising the use of an electric machine to provide an electromagnetic force that directly rotates a differential gear assembly about an axis.

According to a third aspect of the present invention there is provided a method of providing power generation means for generating electricity for a vehicle comprising an electric machine comprising a stator and a rotor, a differential gear assembly comprising a rotatable housing containing an array of gears, and electric storage means, the method comprising using a rotational force of the rotatable housing and the rotor to generate an electric current and storing the electric current in the electric storage means.

The construction of the electric machine and the differential gear assembly used in the third aspect of the present invention is preferably substantially as specified by the first aspect of the present invention.

According to a fourth aspect of the present invention there is provided power generation means for a vehicle, the power generation means comprising a differential gear assembly comprising a rotatable housing containing an array of gears, and an electric machine comprising a stator and a rotor connected to the housing, the arrangement being such that in use the a rotational force of the rotatable housing and the rotor generate an electric current.

It will be appreciated that a suitable storage means for the electric current may be provided for storing the generated electric current.

The construction of the electric machine and the differential gear assembly used in the third aspect of the present invention is preferably substantially as specified by the first aspect of the present invention.

According to a fifth aspect of the present invention there is provided a method of providing breaking means for a vehicle, the method comprising the use of the electric machine and differential gear assembly as an electric generator, wherein the rotational force of the rotatable housing is converted into an electric current.

The electric machine and differential gear assembly used in the fourth aspect of the present invention is preferably as specified by the first aspect of the present invention.

The present invention may include any combination of the features or limitations referred to herein.

The present invention may be carried into practice in various ways, but an embodiment will now be described by way of example only with reference to the accompanying drawing in which:

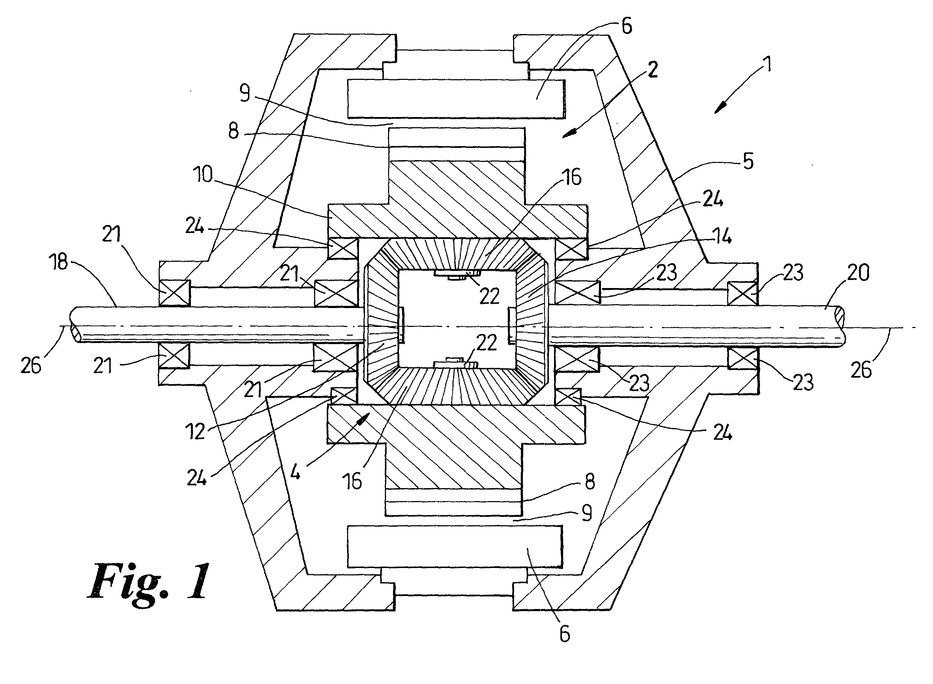

Figure 1 shows a partial cross section of a vehicle power means comprising a combined electric machine and differential gear assembly.

With reference to Figure 1, a vehicle power generation means 1 comprises an electric machine 2 and a differential gear assembly 4 disposed within a housing structure 5.

The electric machine 2 comprises a stator portion 6, and a rotor portion 8 disposed radially inward of the stator portion 6 and spaced therefrom by an air gap 9. The electric machine 2 is preferably a brushless DC motor, as this will accommodate the differential gear assembly within the rotor portion 8. The electric machine 2 would be supplied with power from a suitable power source such as an electric battery.

The differential gear assembly 4 comprises a rotatable tubular housing 10 that contains a first bevel output gear 12, a second bevel output gear 14 and two idler bevel gears 16. The first bevel output gear 12 is rigidly connected to one end of a first axle 18 and the second bevel output gear 14 is rigidly connected to one end of a second axle 20. The end portion of the first axle 18 is supported by the housing structure 5 via a set of bearings 21. The end portion of the second axle 20 is supported by the housing structure 5 via a set of bearings 23. The idler bevel gears 16 are rotatably mounted on respective shafts 22 that are each connected to the housing 10. The housing 10 is rotatably supported by the housing structure 5 via a set of bearings 24. A vehicle wheel (not shown) is disposed at the respective distal ends of the first axle 18 and the second axle 20.

In use the electric battery supplies the electric machine 2 with an electric current which in turn produces an electromagnetic force generated by the stator 6 and the rotor 8. This force produces a torque that rotates the rotor 8 and the differential housing 10 about a common axis 26. Those skilled in the art will appreciate that the design of the stator 6 and rotor 8 and the torque required will depend upon the type of vehicle driven by the power means 1.

The power generation means 1 may be mounted between the rear wheels of a motorised wheel chair, a scooter or any other such vehicle. When the vehicle is travelling in a straight line the housing 10 and the bevel output gears 12, 14 rotate but the idler bevel gears 16 will not rotate about their respective shafts 22. When the vehicle travels through a bend the first axle 18 and the bevel output gear 12 will rotate at a different rotational speed to the second axle 20 and the bevel output gear 14. Due to the different rotational speeds of the bevel output gears 12 and 14, the idler bevel gears 16 will rotate on their respective shafts 22.

There are various benefits by the electric machine being a brushless DC motor such as a high torque at low speeds. The combination of the differential gear assembly eliminates the need for a reduction gearing or reduction gearbox. There is also a high efficiency, a long life and low noise compared with known conventional brushed motor units.

The power generation means 1 in particular the electric machine 2 and differential gear assembly 4 may also be used as an electric generator. The velocity of the vehicle is converted into a rotational velocity of the tubular housing 10 and the rotor portion 8 of the electric machine 2. The rotational velocity of the rotor portion 8 is used to generate an electric current in the stator portion 6. It will be appreciated that when the electric machine 2 is used as an electric generator and it will provide breaking means for the vehicle. The electric power generated by the electric machine 2 could be stored in the electric battery for future use by the power means 1. There are advantages provided by using the electric machine 2 as a generator. The range of the vehicle is increased if some of the electrical energy stored in the batteries is generated by the electric machine 2.

## Claims

1. Power generation means 1 for propelling a vehicle, **characterised in that** the power generation means 1 comprises a differential gear assembly 4 comprising a rotatable housing 10 containing an array of gears 12, 14, 16, and an electric machine 2 comprising a stator 6 and a rotor 8 connected to the housing 10, the arrangement being such that in use the electromagnetic rotational force generated by the electric machine 2 rotates the rotor 8 and the housing 10 of the differential gear assembly thus providing power output.

2. Power generation means 1 as claimed in claim 1, wherein the rotor 8 is directly attached to the housing 10, the arrangement being such that in use the rotational velocity of the rotor 8 is the same as the rotational velocity of the housing 10.

3. Power generation means 1 as claimed in claim 1 or claim 2, wherein the rotatable housing 10 of the differential gear assembly 4 is disposed co-axially within the rotor of the electric machine 2.

4. Power generation means 1 as claimed in any one of claims 1 to 3, wherein the rotatable housing 10 of the differential gear assembly 4 is integrally formed with part of the rotor 8 of the electric machine 2.

5. Power generation means 1 as claimed in any one of claims 1 to 4, wherein the rotor 8 is disposed co-axially within the stator 6 and the rotor 8 is disposed co-axially around the rotatable housing 10 of the differential gear assembly 4; the arrangement being such that, in use, the electromagnetic rotational force rotates both the rotor 8 and the rotatable housing 10 about a common axis.

6. Power generation means 1 as claimed in any one of claims 1 to 5, wherein the electric machine 2 is a DC motor.

7. Power generation means 1 as claimed in claim 6, wherein the electric machine 2 is a brushless DC motor.

8. Power generation means 1 as claimed in any one of claims 1 to 7, wherein the differential gear assembly 4 comprises two output gears 12, 14 each connected to an end of a respective axle 18, 20, and a pair of idler gears 16, each rotatably mounted on a respective shaft 22, each idler gear 16 meshing with both output gears 12, 14.

9. Power generation means 1 as claimed in claim 8, wherein the two output gears 12, 14 and the two axles 18, 20 are disposed co-axially with the rotational axis of the rotor 8.

10. Power generation means 1 as claimed in claim 8, wherein the output gears 12, 14 are bevel gears.

11. Power generation means 1 as claimed in claim 10, wherein the idler gears 16 are bevel gears.

12. Power generation means 1 as claimed in any one of claims 1 to 12, wherein the power generation means 1 comprises a housing structure 5 that supports the stator 6 element of the electric machine 2.

13. Power generation means 1 as claimed in claim 12, wherein the housing structure 5 contains the rotor 8 and the differential gear assembly 4.

14. Power generation means 1 as claimed in claim 13, wherein the housing structure 5 is formed with two channels through which the axles 18, 20 extend in a direction along their rotational axis 26.

15. Power generation means 1 as claimed in any one of claims 12 to 14, wherein the housing structure 5 provides support for the rotor 8 and the differential gear assembly 4.

16. Power generation means 1 as claimed in any one of claims 12 to 15, wherein the housing structure 5 provides support for the axles 18, 20.

17. Power generation means 1 as claimed in any one of claims 12 to 16, wherein the housing structure 5 comprises bearing means 21, 23 through which the support is provided.

18. Power generation means 1 as claimed in any one of the preceding claims, wherein the power generation means 1 is mounted between the rear wheels of a vehicle.

19. Power generation means 1 as claimed in any one of the preceding claims, wherein the electric machine 2 comprises a first operating condition as an electric motor and a second operating condition as an electric generator.

20. A wheelchair comprising power generation means 1 as claimed in any one of the preceding claims.

21. A method of providing driving power generation means for a vehicle, **characterised in that** the method comprises the use of an electric machine 2 to provide an electromagnetic force that directly rotates a differential gear assembly 4 about an axis.

22. A method of providing power generation means for generating electricity for a vehicle comprising an electric machine 2 comprising a stator 6 and a rotor 8, a differential gear assembly 4 comprising a rotatable housing 10 containing an array of gears 12, 14, and electric storage means, the method comprising using a rotational force of the rotatable housing 10 and the rotor 8 to generate an electric current and storing the electric current in the electric storage means.

23. A method of providing power generation means as claimed in claim 22, wherein the electric machine 2 and the differential gear assembly 4 is as claimed in any one of claims 1 to 20.

24. Power generation means for a vehicle, the power generation means comprising a differential gear assembly 4 comprising a rotatable housing 10 containing an array of gears 12, 14, and an electric machine 2 comprising a stator 6 and a rotor 8 connected to the housing 10, the arrangement being such that in use a rotational force of the rotatable housing 10 and the rotor 8 generate an electric current.

25. Power generation means as claimed in claim 24, wherein the construction of the electric machine 2 and the differential gear assembly 4 is as claimed in any one of claims 1 to 20.

26. A method of providing breaking means for a vehicle, the method comprising the use of the electric machine 2 and differential gear assembly 4 as an electric generator, wherein the rotational force of the rotatable housing 10 is converted into an electric current.

27. A method as claimed in claim 26, wherein the electric machine and differential gear assembly 4 used is constructed as claimed in any one of claims 1 to 20.
